(19) Europäisches Patentamt
European Patent Office
Office européen des brevets

(11) **EP 1 412 710 B1**

(12) **EUROPÄISCHE PATENTSCHRIFT**

(45) Veröffentlichungstag und Bekanntmachung des Hinweises auf die Patenterteilung:
**02.09.2015 Patentblatt 2015/36**

(21) Anmeldenummer: **02772106.7**

(22) Anmeldetag: **26.07.2002**

(51) Int Cl.:
*G01F 23/00* (2006.01)    *G01F 25/00* (2006.01)
*G01S 13/00* (2006.01)    *G01F 23/28* (2006.01)
*G01F 23/284* (2006.01)   *G01F 23/296* (2006.01)

(86) Internationale Anmeldenummer:
**PCT/EP2002/008368**

(87) Internationale Veröffentlichungsnummer:
**WO 2003/016835 (27.02.2003 Gazette 2003/09)**

(54) **VERFAHREN ZUR AUSWERTUNG VON MESSSIGNALEN EINES NACH DEM LAUTZEITPRINZIP ARBEITENDEN MESSGERÄTES**

METHOD FOR EVALUATING THE MEASURING SIGNALS OF A PROPAGATION-TIME BASED MEASURING DEVICE

PROCEDE POUR EVALUER LES SIGNAUX DE MESURE D'UN APPAREIL DE MESURE FONCTIONNANT SELON LE PRINCIPE DU TEMPS DE PROPAGATION

(84) Benannte Vertragsstaaten:
**AT BE BG CH CY CZ DE DK EE ES FI FR GB GR IE IT LI LU MC NL PT SE SK TR**

(43) Veröffentlichungstag der Anmeldung:
**28.04.2004 Patentblatt 2004/18**

(73) Patentinhaber: **Endress + Hauser GmbH + Co. KG 79689 Maulburg (DE)**

(72) Erfinder:
• **MÜLLER, Roland
79585 Steinen (DE)**
• **SCHROTH, Herbert
79650 Schopfheim (DE)**

• **CRAMER, Stefan
Wiesenstr.14, 35390 Giessen (DE)**

(74) Vertreter: **Andres, Angelika Maria et al
Endress+Hauser (Deutschland) AG+Co. KG
PatServe
Colmarer Strasse 6
79576 Weil am Rhein (DE)**

(56) Entgegenhaltungen:
**EP-A- 1 020 735     WO-A-00/43806
DE-A- 19 544 071    DE-A1- 4 233 324
DE-A1- 4 327 333    GB-A- 2 164 151
US-A- 3 474 337     US-A- 4 234 882
US-A- 4 470 299     US-A- 5 587 969
US-A- 5 614 911     US-A- 5 898 308**

**Beschreibung**

Die Erfindung betrifft ein Verfahren zur Auswertung von Meßsignalen eines nach dem Laufzeitprinzip arbeitenden Meßgeräts, das zur Messung des Füllstands eines Mediums in einem Behälter dient.

Füllstandsmeßgeräte dieser Art sind an sich bekannt; sie sind üblicherweise oberhalb des Mediums - auch Füllgut genannt - im oder am Behälter montiert. Zur Bestimmung des Füllstands des Mediums werden dazu beispielsweise im Füllstandsmeßgerät generierte Hochfrequenzsignale, Ultraschallsignale oder optische Signale vom Meßgerät in Richtung auf das Mediums gesandt, wo sie an einer Oberfläche des Mediums reflektiert werden. Diese auch als Nutzsignale bezeichneten reflektierten Signale werden vom Füllstandsmeßgerät erfaßt, ihre Laufzeit ist ein Maß für den Abstand des Meßgerätes von der reflektierenden Oberfläche des Mediums. Mit Kenntnis der Behältergeometrie läßt sich daraus der Füllstand des Mediums im Behälter bestimmen.

Bekannte Füllstandsmeßgeräte der beschriebenen Art sind beispielsweise auch Füllstandsmeßgeräte, die mit Mikrowellen- oder Radar-Meßsignalen arbeiten, wobei die Radarsignale von einer Antenne auf das Medium frei abgestrahlt und von dort zurückkehrend empfangen werden können. Andere Füllstandsmeßgeräte mit Radar-Meßsignalen sind beispielsweise solche, bei denen die Radar-Meßsignale von einem Ins Füllgut ragenden Wellenleiter geführt werden.

Ein großes Problem bei den dargestellten Füllstandsmeßgeräten, die nach dem Laufzeitprinzip arbeiten, besteht darin, daß die Füllstandsmeßgeräte nicht nur reflektierte Signale von der Füllgutoberfläche empfangen sondern auch unerwünschte Reflektionen von sogenannten Störstellen im Behälter. Diese Störsignale, die beispielsweise von Einbauten im Behälter oder von der Behältergeometrie hervorgerufen werden, können die eigentlich erwünschten Nutzsignale von der Füllgutoberfläche derart überlagern, daß sie bei einer Auswertung der Meßsignale nicht mehr oder nicht eindeutig identifiziert werden können.

Andererseits lassen sich aus den Störsignalen eine Fülle von Informationen gewinnen, mit denen die Funktion des Meßgeräts überprüft und mit denen weitere Informationen zum Füllgut (z. B. Dielektrizitätskonstante, Leitfähigkeit, Feuchtegehalt, Temperatur, Mischungsverhältnis, Schaumbildung, Phasentrennung) erhalten werden können, was aber bisher nicht in dieser Form stattfindet.

In der DE-A- 42 33 324 wird beispielsweise ein freistrahlendes Radargerät mit Sende- und Empfangsantenne beschrieben, bei dem ein Signal vom Boden des Behälters verwendet wird, um bei nicht eindeutig identifizierbaren Füllstandssignal den Füllstand des Mediums im Behälters bestimmen zu können. Das dort ausschließlich für Messung von Flüssigkeiten beschriebene Verfahren setzt jedoch zur Bestimmung des gesuchten Füllstands eine recht genaue Kenntnis der Dielektrizitätskonstante und gegebenenfalls der magnetischen Permeabilität des Füllgutes voraus, die jedoch nicht immer vorhanden ist, zumal sich die physikalischen Eigenschaften des Mediums im Behälter auch ändern können. Die DE-A- 42 33 324 schlägt dazu vor, aus der zeitlichen Verschiebung des Bodensignals entweder direkt den Füllstand zu berechnen oder aber bei der Auswertung der Signale der Meßkurve ein Fenster über die restlichen Signale zu legen und in diesem Fenster das Füllstandssignal zu identifizieren.

In der EP-A- 0 457 801 wird eine Störstelle im Schwallrohr zur Kalibration eines Füllstandsmeßgerätes mit geführten Radarsignalen vorgeschlagen, wobei ausdrücklich polarisierbare Signale gefordert werden und die Polarisationsebene durch eine Polarisationseinrichtung veränderbar ist, wodurch die Stärke der Störreflektion an der Störstelle verändert werden kann. Die Verwendung einer Polarisationseinrichtung ist nicht nur aufwendig und teuer, vielfach sind die Signale auch überhaupt nicht polarisierbar, zum Beispiel bei Eindraht- oder Koax-Wellenleitern eines TDR-Füllstandsmeßgeräts.

In der WO-A-00/43806 wird ein TDR-Füllstandsmeßgerät beschrieben, bei dem im Rahmen einer Trennschichtmessung die Dielektrizitätskonstante bestimmt werden kann. Es ist von zwei reflektierenden Oberflächen als zwei "Produkt-Grenzschichten" des Füllgutes die Rede, wobei eines der davon erzeugten Störsignale auch durch das Ende des Wellenleiters oder durch den Boden des Behälters hervorgerufen sein kann. Die WO-A-00/43806 diskutiert zwar eine Berechnung der Dielektrizitätskonstante des Mediums, diese Berechnung ist jedoch fehlerhaft.

Außerdem wurden in der Vergangenheit bereits bei Füllstandsmeßgeräten mit geführten Radar-Meßsignalen Wellenleiter verwendet, deren Geometrie vorgegebene Reflektionsstellen, also bekannte Störstellen aufweist. Aber eine umfassende Auswertung der davon gelieferten Signale in der oben erwähnten Richtung Ist bisher nicht erfolgt:

So ist beispielsweise in der US-A- 3,474,337 ein Füllstandsmeßgerät mit auf einem Wellenleiter geführten Radarsignalen, ein sogenanntes "TDR-System (Time Domain Reflectometry)" beschrieben, bei dem geometrische Reflexionsstellen in einem koaxialen Wellenleiter als Referenzstellen verwendet werden. Der in diesem US-Patent beschriebene und geschützte Gegenstand umfaßt jedoch ausnahmslos Wellenleiter mit zumindest zwei getrennten Leitern und ist ansonsten relativ allgemein beschrieben. Die US-A- 3,474,337 offenbart keine Möglichkeit, aus der Reflektion allein der Störstellen den Füllstand oder sonst eine Größe zu bestimmen. Störsignale werden nur im Zusammenhang mit Reflektionen am Füllgut ausgewertet.

Aus der EP 1 020 735 A2 ist ein Verfahren zur Verarbeitung eines TDR-Signals, das bei einem Messgerät, das nach dem Impulslaufzeitverfahren (TDR) arbeitet, eingesetzt wird, so dass ein gültiges Ausgangssignal erzeugt wird. Das TDR-Signal wird periodisch entlang eines Wellenleiters detektiert und nach wenigstens einer potentiellen Bezugsreflektion untersucht. Diese Bezugsreflektion dient als Bezugspunkt, auf dessen Grundlage das Ausgangssignal berechnet wird.

Aus der US 5,614,911 ist ein Verfahren zur radar-basierten Füllstandsmessung bekannt geworden, bei dem mittels einer Antenne Mikrowellen zur Oberfläche eines Füllgutes ausgesendet und die reflektierten Mikrowellen empfangen werden. Die aktuelle Echofunktion wird mit einer abgespeicherten Echofunktion verglichen, die unter ungestörten Bedingungen ermittelt wurde. Anhand auftretender Abweichungen zwischen den beiden Echofunktionen im Antennenbereich und in dem sich an die Antenne anschließenden Nahbereich lässt sich eine Ansatzbildung und/oder eine sonstige Störung erkennen.

Die DE 43 27 333 A1 beschreibt ein Verfahren zur Messung des Füllstandes einer Flüssigkeit In einem Behälter nach dem Radarprinzip, bei dem von einer über dem Flüssigkeitsspiegel angeordneten Antenne (Sendeantenne) ein Mikrowellensignal in Richtung des Flüssigkeitsspiegels abgestrahlt wird, bei dem ein am Flüssigkeitsspiegel reflektiertes Meßsignal von der Antenne (Sendeantenne) oder vorzugsweise von einer weiteren Antenne (Empfangsantenne) empfangen wird und bei dem aus der für das Meßsignal ermittelten Laufzeit die Füllstandshöhe berechnet wird. In einem gemessenen Spektrum auftretende und von der Füllstandshöhe der Flüssigkeit unabhängige Störsignale werden mit Hilfe der gemessenen Intensität eines ersten Störsignals korrigiert.

Die US 4,234,882 beschreibt ein Verfahren und eine Vorrichtung zur Bestimmung des Inhalts eines Bunkers oder eines Silos mittels hochfrequenter Signale, die über einen Rampengenerator periodisch moduliert werden. Ein Mischer mischt die ausgesendeten und die empfangenen Signale und erzeugt eine Schwebungsfrequenz. Die Vorrichtung ist so ausgestaltet, dass sie Empfangssignale, die an festen Einbauten in dem Bunker oder dem Silo reflektiert werden, aus den Schwebungsfrequenzen herausfiltert. Hierzu werden die empfangenen Signale mit gespeicherten Signalen verglichen.

Der Erfindung liegt daher die Aufgabe zugrunde, ein Verfahren anzugeben, mit dem die zur Bestimmung des Füllstand eines Mediums in einem Behälter mit einem nach dem Laufzeitprinzip arbeitenden Meßgerät herangezogenen Meßsignale und Informationen umfassender als bisher ausgewertet werden, und zwar ohne genaue Kenntnisse der physikalischen Eigenschaften des Mediums, und mit dem der Füllstand des Mediums auch dann ermittelt werden kann, wenn unter den Meßsignalen ein von einer Reflektion an der Oberfläche des Mediums herrührendes Signal nicht oder nicht eindeutig bestimmbar ist.

Diese Aufgabe wird nach der Erfindung gelöst durch ein Verfahren wie es im Anspruch 1 beschrieben ist

Erfindungsgemäß werden die Stör- von den Nutzsignalen aufgrund von vorgegebenen Signalinformationen voneinander unterschieden, wobei als Signalinformationen die Amplitude, das Vorzeichen, die Phasenlage, die Breite, die Form und/oder die Position der Signaldaten herangezogen werden.

Eine Ausgestaltung des erfindungsgemäßen Verfahrens sieht dazu vor, daß der gesuchte Füllstand $L^{(2)}$ zu einer Zeit $t^{(2)}$, bezogen auf den bekannten Ort $x^{(0)}$ eines ein Störsignal hervorrufenden Einbaus oder Teils des Meßgeräts, ermittelt wird aus einem für diesen Ort $x^{(0)}$ des Behälters oder des Meßgerätes zu einem früheren Zeitpunkt $t^{(1)}$ ermittelten Störsignal an der Stelle $x^{(1)}$, einem zum selben Zeitpunkt $t^{(1)}$ aus einem Nutzsignal ermittelten Füllstand $L^{(1)}$ und der veränderten Position $x^{(2)}$ zum Zeitpunkt $t^{(2)}$ des Störsignals in der aktuellen Meßkurve, insbesondere nach der Formel

$$L^{(2)} = L^{(1)} \cdot \frac{x^{(2)} - x^{(0)}}{x^{(1)} - x^{(0)}}$$

Bei einer weiteren Ausführungsform der Erfindung ist für den Fall, daß ein Füllstandssignal nicht oder nicht eindeutig identifizierbar ist, vorgesehen, daß der gewünschte Füllstand unter Berücksichtigung der zeitlichen Verschiebung von mindestens zwei Störsignalen der Meßkurve für bekannte geometrische Orte ermittelt wird.

Bei einer bevorzugten Ausgestaltung des Verfahrens nach der Erfindung werden die Referenz-Signaldaten aus mindestens einer vorbekannten Meßkurve gewonnen oder aus bekannten meßgeräte- und/oder behälterspezifischen Daten bestimmt.

Eine weitere bevorzugte Ausgestaltung des erfindungsgemäßen Verfahrens verwendet Referenz-Signaldaten, die durch Auswertung einer Messung bei leerem Behälter gewonnen werden.

Eine andere bevorzugte Ausführungsform des Verfahrens nach der Erfindung berücksichtigt Extremwerte einer Meßkurve bei der Auswahl der zu verwendenden Referenz-Signaldaten oder Signaldaten der Meßkurve.

Bei noch einer weiteren bevorzugte Ausführungsform des erfindungsgemäßen Verfahrens wird davon ausgegangen, daß die Referenz-Signaldaten in Form einer Referenzkurve vorliegen.

Weitere bevorzugte Ausführungsformen des Verfahren nach der Erfindung sehen vor, daß die Referenzkurve mit der Meßkurve durch Subtraktion oder durch Korrelation verglichen wird, wobei die Subtraktion oder Korrelation sich auch nur auf einen Teil der Signaldaten beschränken kann.

Noch andere bevorzugte Ausführungsformen des erfindungsgemäßen Verfahrens erlauben, die Stör- von den Nutzsignalen aufgrund von vorbekannten behälter-bzw. meßgerätespezifischen Kenndaten zu unterscheiden, wobei auch eine Unterteilung der Meßstrecke in Bereiche aufgrund von vorbekannten Behältereinbauten oder in den Behälter hineinragenden Teilen des Meßgerätes vorgenommen werden kann.

Bei noch einer anderen bevorzugten Ausführungsform des erfindungsgemäßen Verfahrens werden ausgewählten Signaldaten der Meßkurve entsprechende Signaldaten der Referenzkurve zugeordnet und eine zeitliche Veränderung der Signaldaten zur Unterscheidung von Nutzsignalen und Störsignalen verwendet.

Weitere bevorzugte Ausführungsform des erfindungsgemäßen Verfahrens berücksichtigen, daß sich Störsignale von einem Nutzsignal dadurch unterscheiden, daß sich die Störsignale zeitlich in gegensätzlicher Richtung als das Nutzsignal verändern, und/oder eine Wichtung der festgestellten Störsignale bzw. Nutzsignale für die Bestimmung des Füllstands in Abhängigkeit von der Laufzeit.

Eine andere bevorzugte Ausführungsform der Erfindung beschäftigt sich mit dem Fall, wo ein Füllstand bestimmt worden ist, und wobei aus der zeitlichen Verschiebung von mindestens zwei Störsignalen der Meßkurve für bekannte geometrische Orte, die sich im Behälter oberhalb des Mediums befinden, ein Korrekturfaktor für die Ausbreitungsgeschwindigkeit in der Gasphase ermittelt wird, der zur Korrektur des bestimmten Füllstands dient.

Bei noch einer weiteren bevorzugten Ausführungsform des erfindungsgemäßen Verfahrens werden aus Signalen des Bereichs der Meßkurve, in dem die Laufzeit aktueller Meßsignale mit der von entsprechenden Referenz-Signaldaten im wesentlichen übereinstimmt, Informationen über den Zustand oder die Funktionsfähigkeit des Meßgerätes gewonnen.

Andere Ausführungsformen des Verfahrens nach der Erfindung berücksichtigen unterschiedliche Füllstandsmeßgeräte nach dem Laufzeitverfahren.

Eine der grundlegenden Überlegungen hinter der Erfindung Ist, daß in dem Fall, wo zwar ein Signal für ein Rührwerk oder einen anderen Einbau in einem Behälter in der Meßkurve erkennbar ist aber kein Füllstandssignal, dies nicht bedeuten muß, daß der Behälter leer ist, wie es von den meisten bisher bekannten Füllstandsmeßgeräten suggeriert wird, sondern daß sich die reflektierende Oberfläche des Mediums im Behälter unterhalb des Rührwerkes bzw. des Behältereinbaus sein muß.

Eine andere der Erfindung zugrundeliegende Idee ist, daß wenn bei einem Füllstandsmeßgerät nach dem Radarprinzip bei kleiner Dielektrizitätskonstanten des Mediums im Behälter kein Füllstandssignal erkennbar ist und ein von einem Rührwerk oder sonstigen Behälter-Einbau hervorgerufenes Signal nicht an der erwarteten Stelle erkennbar ist, daraus geschlossen werden kann, daß der Füllstand des Mediums oberhalb des Rührwerkes oder Einbaus im Behälter sein muß, da durch den von der Dielektrizitätskonstanten hervorgerufenen Effekt der effektive Weg der Signale vom Meßgerät zum Rührwerk oder sonstigen Behälter-Einbau und zurück verlängert wird und das Rührwerk weiter entfernt scheint.

Darüber hinaus berücksichtigt die Erfindung, daß ein Tank, ein eventuell darin angeordnetes Schwallrohr, ein Bypass oder auch ein Endgewicht eines seilförmigen Wellenleiters eines Füllstandsmeßgerätes nach dem Radarprinzip eine Menge von Signalen hervorrufen, aus denen und aus deren Lage in einer aus Meßsignalen gebildeten Laufzeitkurve indirekt auf den Füllstand geschlossen werden kann. Mit Kenntnis des Abstandes zweier Störsignale und des tatsächlichen Abstands der sie hervorrufenden Reflektionsstellen kann man sogar bei allen Füllstandsmeßgeräten nach dem Laufzeitprinzip den Füllstand schätzen, ohne die Ausbreitungsgeschwindigkeit der Meßsignale zu kennen. Da die Ausbreitungsgeschwindigkeit von Materialparametern, etwa der Dielektrizitätskonstanten bei Radar-Signalen, abhängt, ist es also nicht erforderlich, diese Materialparameter zu kennen.

Eine andere Grundüberlegung zur Erfindung ist, daß selbst wenn das gesuchte Nutzsignal, also das Echo des Meßsignals an der Oberfläche des Füllgutes, aus einem "Sumpf" nicht davon unterscheidbarer Signale, die eine Signatur bzw. Hintergrundsignatur darstellen, nicht herauslesbar ist, sich das Muster dieses "Sumpfes" bzw. dieser Signatur doch derart verändert durch das Füllstandssignal, daß ein Vergleich des aktuellen Musters der Signatur mit einem bereits bekannten Muster auf den gesuchten Füllstand schließen läßt. Dieses Problem tritt häufig im Nahbereich des Füllstandsmeßgerätes auf, wo die Gefahr besonders groß ist, daß das gesuchte Füllstands-Echosignal nicht eindeutig Identifiziert werden kann durch das Ausschwingen des Sendesignals.

Es läßt sich feststellen, daß mit dem Verfahren nach der Erfindung eine erhöhte Meßsicherheit und Zuverlässigkeit der Messung möglich wird, wobei neben dem gesuchten Füllstandswert weitere Informationen zum Füllgut und zum Zustand des Meßgeräts gewonnen werden können.

Zusammengefaßt bedeutet dies, daß die Erfindung in vorteilhafter Weise eine Bestimmung des Füllstands erlaubt, wenn kein direktes Füllstandssignal aus den Meßsignalen herauszulesen ist. Sie erlaubt auch jene Bereiche der aus den Meßsignalen gebildeten Meßkurve von einer Betrachtung aufzuschließen, In denen kein Füllstandssignal sein kann. Die Erfindung ermöglicht auch eine Beurteilung des Zustandes des Meßgerätes und/oder des Füllgutes anhand von Signalen, die nicht vom Füllstand abhängig sind. Es ist damit auch möglich, anhand eines einzelnen zeitlich verschobenen Störsignales den gesuchten Füllstand mit Kenntnis der Ausbreitungsgeschwindigkeit zu schätzen. Mithilfe der Auswertung der durch die Dielektrizitätskonstante bedingten zeitlichen Verschiebung zweier Störsignale läßt sich der Füllstand auch ohne Kenntnis der Ausbreitungsgeschwindigkeit bestimmen.

Die Erfindung wird nachfolgend unter Hinweis auf bevorzugte Ausführungsbeispiele und die beigefügte Zeichnung genauer beschrieben und erläutert. Dabei zeigen:

Fig. 1 eine schematische Darstellung eines freistrahlenden Radarmeßgeräts zur Bestimmung des Füllstands eines Mediums in einem Behälter;

Fig. 2 eine schematische Darstellung eines Füllstandsmeßgeräts mit auf einem Wellenleiter geführten Radarsignalen auf einem Behälter;

Fig. 3a,b schematische Darstellungen von zwei Meßkurven eines Füllstandsmeßgeräts mit einer vorbekannten Störstelle zu unterschiedlichen Zeitpunkten;

Fig. 4 ein Diagramm, bei dem schematisch der Einfluß der angenommenen Dielektrizitätskonstante auf den angezeigten Füllstand im Vergleich zum tatsächlichen Füllstand dargestellt ist;

Fig. 5 ein Diagramm zur Bestimmung des Füllstands nach der Erfindung;

Fig. 6 eine schematische Darstellung eines Füllstandsmeßgeräts mit Wellenleiter und zwei Reflektionsstellen an seinem Endgewicht sowie eine entsprechende Laufzeitkurve;

Fig. 7 eine schematische Darstellung eines Füllstandsmeßgeräts mit Wellenleiter und einer zusätzlichen Reflektionsstelle auf dem Wellenleiter;

Fig. 8 eine schematische Darstellung einer Laufzeitkurve eines Füllstandsmeßgeräts mit Wellenleiter und mehreren Reflektionsstellen auf dem Wellenleiter;

Fig. 9 eine schematische Darstellung einer Laufzeitkurve entsprechend Fig. 8 bei zwei verschiedenen Füllständen sowie Diagramme zum Bestimmen der komplexen Dielektrizitätskonstanten nach der Erfindung.

Der Einfachheit halber und solange dies nicht mißverständlich ist, sind gleiche Geräte, Module oder Teile von Geräten oder gleiche Füllgüter und Medien mit gleichen Bezugszeichen versehen.

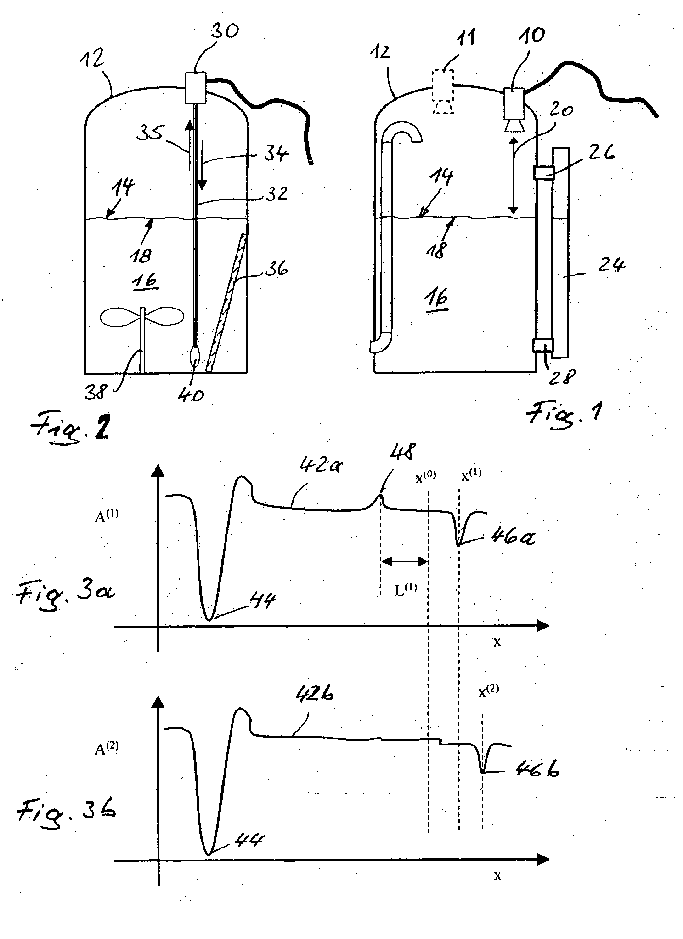

In Fig. 1 ist schematisch und beispielhaft eine typische Anordnung eines Füllstandsmeßgeräts 10 nach dem Radarprinzip dargestellt, das auf einem Behälter 12 montiert ist und in diesen hineinragt. Das über ein nicht näher bezeichnetes Kabel elektrisch versorgte und beispielsweise mit einer hier nicht näher dargestellten Meßwarte verbundene Radar-Füllstandsmeßgerät 10 dient dazu, den Füllstand 14 eines im Behälter 12 befindlichen Mediums 16 zu bestimmen. Das Radar-Füllstandsmeßgerät 10 sendet dazu von einer in Fig. 1 angedeuteten aber hier nicht näher bezeichneten Hornantenne Radärsignale, vorzugsweise gepulste Meßsignale, in Richtung auf das Medium 16 aus, die an einer Oberfläche 18 des Mediums 16 reflektiert werden. In Fig. 1 ist dies durch einen Doppelpfeil 20 veranschaulicht. Die reflektierten Meßsignale werden von der Hornantenne empfangen und im Radar-Füllstandsmeßgerät 10 mit den ausgesandten Meßsignalen verglichen. Die Zeit vom Aussenden eines Meßsignals bis zum Empfang des reflektierten Signals wird erfaßt und ist ein Maß für den Abstand zwischen dem Radar-Füllstandsmeßgerät 10 und der Oberfläche 18 des Mediums 16. Unter Berücksichtigung der Geometrie des Behälters 12 wird aus dem Abstand der gesuchte Füllstand des Mediums 16 bestimmt. Für den Fall, daß aus den empfangenen Meßsignalen kein Signal eindeutig erkennbar ist, das als Füllstandssignal, also reflektiertes Signal von der Oberfläche 18 des Mediums 16 anzusehen ist, wird der Füllstand des Mediums 16 nach dem Verfahren nach der Erfindung bestimmt.

In Fig. 1 sind auch ein Einfüllrohr 22 schematisch dargestellt und ein Bypass-Rohr 24 mit einem oberen Querrohr 26 und einem unteren Querrohr 28. Am oberen Querrohr 26 wird ebenfalls eine Reflektion der vom Radar-Füllstandsmeßgerät 10 ausgesandten Meßsignale erfolgen, wobei dieses Störsignal unter Anwendung des erfindungsgemäßen Verfahrens zur Bestimmung des gesuchten Füllstands herangezogen werden kann.

Als 'Störsignale' werden hier jene Signale bezeichnet, die keine Signale sind, die von einer reflektierenden Oberfläche des Mediums herrühren. Sie 'stören' nicht im eigentlichen Sinne bei dem erfindungsgemäßen Verfahren, sondern dienen sogar der Feststellung bzw. Bestimmung des gesuchten Füllstands. Der Name 'Störsignale' kommt aus dem Stand der Technik, wo diese Signale insofern stören, als sie die eigentlichen Füllstandssignale überdecken können oder sie nicht eindeutig identifizieren lassen. Bekannte Verfahren zur Bestimmung des gesuchten Füllstands sind ohne eindeutiges Füllstandssignal relativ hilflos und erlauben dann keine eindeutige Bestimmung des Füllstands.

Sollte das Radar-Füllstandsmeßgerät 10 an einer gestrichelt dargestellten Position 11 im Behälter 12 montiert sein, ist von einem Störsignal des oberen Teils des Einfüllrohrs 22 auszugehen. Auch dieses Signal kann beim erfindungsgemäßen Verfahrens zur Bestimmung des gesuchten Füllstands herangezogen werden.

Der Vollständigkeit halber sei erwähnt, daß das in Fig. 1 dargestellte Füllstandsmeßgerät auch ein anderes freistrahlendes Meßgerät sein kann. So ist es beispielsweise denkbar, ein anderes Füllstands-Radargerät mit einer Planarantenne oder ein Füllstands-Radargerät mit einer Stabantenne zu verwenden. Auch bei diesen Füllstandsmeßgeräten nach dem Laüfzeltprinzip treten die beschriebenen Störsignale auf, die in dem Fall, wo keln Füllstandssignal eindeutig oder gar nicht identifiziert werden kann, im Zusammenhang mit dem erfindungsgemäßen Verfahren zur Bestimmung des gesuchten Füllstands herangezogen werden können.

Ein anderer Aufbau eines Füllstandsmeßgerätes, mit dem das Verfahren zur Bestimmung eines gesuchten Füllstands ausgeführt werden kann, ist in Fig. 2 dargestellt. Hier handelt es sich um ein sogenanntes TDR-Füllstandsmeßgerät 30, bei dem auf einem Wellenleiter 32 geführte Mikrowellen- bzw. Radarsignale verwendet werden. Die Meßsignale werden auf dem Wellenleiter 32, der in das Medium 16 eintaucht, geführt, an der Oberfläche 18 des Mediums 16 reflektiert und auf dem Wellenleiter 32 zum TDR-Füllstandsmeßgerät 30 zurückgeieitet. Dieser Signalverlauf wird durch zwei Pfeile 34, 35 in Fig. 2 veranschaulicht.

Auch im TDR-Füllstandsmeßgerät 30 wird wie bereits zu Fig. 1 beschrieben, die Laufzeit der Meßsignale zur und von der reflektierenden Oberfläche 18 des Mediums zurück zum TDR-Fültstandsmeßgerät 30 und so der Abstand zwischen TDR-Füllstandsmeßgerät 30 und dem Medium 16 erfaßt, woraus der gesuchte Füllstand ermittelt wird. Vorausgesetzt wird allerdings, daß unter den empfangenen Meßsignalen ein eindeutiges Signal für den Füllstand gefunden wird. Ist dies nicht Fall, kann mit dem erfindungsgemäßen Verfahren der Füllstand anhand von Störsignalen und aus der besonderen Auswertung der zeitlichen Verschiebung von einzelnen Signalen bzw. Signalmustern ermittelt werden. Störsignale bei TDR-Füllstandsmeßgeräten können überall dort auftreten, wo Behältereinbauten in der Nähe des Wellenleiters 32 zu finden sind. Dies sind bei der beispielhaften Darstellung der Fig. 2 eine Leiter 36 und ein Rührwerk 38.

Um bei einem nicht eindeutigen Signal, das auf eine reflektierende Oberfläche 18 eines Mediums 16 In einem Behälter 12 schließen läßt, trotzdem den Füllstand des Mediums bestimmen zu können, wird das Verfahren nach der Erfindung bei einem Füllstandsmeßgerät nach einem der Beispiele in Fig. 1 oder 2 wie folgt angewendet.

Zunächst werden Referenz-Signaldaten in Abhängigkeit von der Laufzeit des Signals aufgenommen, die beispielsweise Referenz-Signaldaten aus mindestens einer vorbekannten, bereits zu einem früheren Zeitpunkt aufgenommenen Meßkurve sein können oder aus bekannten meßgeräte- und/oder behälterspezifischen Daten bestimmt werden. Im letzteren Falle handelt es sich belspielsweise um die oben beschriebenen reflektierten Signale, die von Leitern 36, Einfüllrohren 22, Querrohren 26, 28 von Bypassrohren oder Rührwerken 38 herrühren. Auch ein am Ende des Wellenleiters 32 angebrachtes Gewichtstück 40, das den Wellenleiter im Behälter straff gespannt hält, erzeugt ein deutliches Signal, das im allgemeinen als EOL-Signal (End-Of-Line-Signal) bezeichnet wird. Statt des hier beispielhaft dargestellten Endgewichtsstücks 40 kann bei anderen Ausführungen des Wellenleiters 32 oder bei anderen Anwendungen und Behältern eine Einspannung verwendet werden, mit der der Wellenleiter 32 am Boden des Behälters verspannt wird. Auch eine solche Einspannung erzeugt ein EOL-Signal.

Am einfachsten erhält man die Signale von Störstellen und Reflektionsstellen von Behältereinbauten, indem bei leerem Behälter 12 eine sogenannte Leermessung mit dem Füllstandsmeßgerät durchgeführt wird. Die jeweiligen Signale, die als Referenzsignale dienen sollen, werden analysiert und bezeichnet, vorzugsweise in bezug auf ihre Amplitude und ihre Signalform, und es wird ihnen die jeweilige Weginformation als Abstand zum Meßgerät und/oder unter Berücksichtigung der Ausbreitungsgeschwindigkeit der Signale im Behälter als Laufzeitinformation zugeordnet. Werden die Signale der Leermessung zu einer Laufzeitkurve zusammengefügt, so spricht man auch von einer "Signatur" des Behälters (und der darin enthaltenen Einbauten).

Anschließend wird eine Meßkurve aus aktuellen Meßsignalen oder ausgewählte Signaldaten der Meßkurve entlang der Meßstrecke zwischen Füllstandsmeßgerät und Oberfläche des Mediums mit den Referenz-Signaldaten verglichen und Stör- und Nutzsignalen unter den Meßsignalen gesucht und bezeichnet. Die Stör- bzw. Nutzsignale werden bewertet und gewichtet in Bezug darauf, in welcher Form sie zur weiteren Bestimmung des Füllstands bzw. weiterer Informationen zum Medium und zur Funktionalität des Füllstandsmeßgerätes dienen können. Die für das Verfahren nach der Erfindung zu verwendenden Referenz-Signaldaten oder Signaldaten der Meßkurve können zum Beispiel als die Extremwerte der Meßkurve ausgewählt werden.

Wie bereits oben erklärt, können die Referenz-Signale in Form einer Referenzkurve angeordnet werden und mit der aktuellen Meßkurve oder, wenn nur ausgewählte Referenz-Signale verwendet werden mit den diesen in der Meßstrecke oder in Bezug auf die Laufzeit entsprechenden aktuellen Meßsignalen verglichen werden. Ein solcher Vergleich, bei dem es darum geht Änderungen der Signale in Form und zeitlicher Zuordnung (Laufzeit), also zeitlicher Verschiebung zu finden und zu bewerten, ist vorzugsweise eine Korrelation der betreffenden Signaldaten oder eine Subtraktion oder ein Vergleich der Position der Extremwerte der Meßkurve mit Extremwerten der Referenzkurve.

Bei der Unterscheidung der Stör- von den Nutzsignalen spielen besonders jene Signale eine Rolle, die aufgrund von vorbekannten behälter- bzw. meßgerätespezifischen Kenndaten, wie z.B. vorbekannten Behältereinbauten oder in den Behälter hineinragenden Teilen des Meßgerätes identifiziert werden können. Mithilfe dieser Signale kann auch eine Unterteilung der Meßstrecke oder der die Meßstrecke repräsentierenden Signale in spezielle Bereiche erfolgen, die nach Stör- bzw. Nutzsignalen durchsucht werden. Der Vorteil ist, daß bei einer solchen Auswertung nur die tatsächlich interessanten Bereiche untersucht werden. Es werden keine Zeit und keine Ressourcen für die Auswertung nicht oder un-interessanter Signale aufgewendet.

Als Signalinformation zur Bewertung der Signale werden vorzugsweise die Amplitude, das Vorzeichen, die Phasenlage, die Breite und/oder die Form der Signaldaten herangezogen, wobei besonders jenen Bereichen besondere Aufmerksamkeit geschenkt wird, wo sich die Störsignale zeitllch in gegensätzlicher Richtung als das Nutzsignal verändern. Dies ist deshalb von Interesse, weil beispielsweise bei der Füllstandsmessung mit Radar bei steigendem Füllstand alle unterhalb des Füllstandssignals liegenden Störsignale durch die verminderte Ausbreitungsgeschwindigkeit im Medium nach unten wandern, also in entgegengesetzter Richtung wie das Füllstandsecho.

Ein praktisches Beispiel, wie mit dem Verfahren nach der Erfindung der Füllstand ermittelt werden kann, wenn ein Störsignal einer vorbekannten Reflektionsstelle eindeutig identifiziert werden kann, wird Im folgenden beschrieben. Hierzu wird auf das Beispiel eines TDR-Füllstandsmeßgerätes mit einem Wellenleiter 32 zurückgegriffen, wie es bereits In Fig. 2 dargestellt ist. In den Fig. 3a und 3b sind beispielhafte Kurven 42a,b aus Meßsignalen dargestellt, wobei in Fig. 3a eine Amplitude des Meßsignals zu einem Zeitpunkt $t^{(1)}$ in Abhängigkeit der Distanz $\times$ zum TDR-Gerät 30 aufgetragen ist. Ein deutlich erkennbares Signal 44 am Anfang der Laufzeitkurve 42a in Fig. 3a ist das Signal, das von der Einkopplung des im. TDR-Füllstandsmeßgerät 30 erzeugten Meßsignals auf den Wellenleiter 32 stammt. Dieses Signal Ist ein starkes Referenzsignal und wird als "Fiducial-Signal" bezeichnet. Ein anderes Signal 46a am Ende der Laufzeitkurve 42a ist das EOL-Signal vom Ende des Wellenleiters 32. Zu dem in Fig. 3a dargestellten Zeitpunkt $t^{(1)}$ ist ein Füllstandssignal 48 eindeutig identifiziert worden, das von einer Reflektion an der Oberfläche des Mediums stammt. Dieses hier der Einfachheit halber als Füllstandssignal 48 bezeichnete Signal liegt zwischen dem Fiducial-Signal 44 und dem EOL-Signal 46a.

Ist zu einem späteren Zeitpunkt $t^{(2)}$ kein Füllstandssignal eindeutig aus einer Meßkurve 42b zu entnehmen, wie in Fig. 3b gezeigt, so kann mit dem bekannten Reflektionssignals vom Ende des Wellenleiters, dem EOL-Signal 46b (siehe Fig. 3b) der gesuchte Füllstand $L^{(2)}$ des Mediums Zeitpunkt $t^{(2)}$ im Behälter bestimmt werden. Bei einem Vergleich der Meßkurven 42a und 42b wird deutlich, daß das EOL-Signal 46a der früheren Messung gegenüber dem EOL-Signal 46b zeitlich verschoben erscheint, obwohl sich tatsächlich die Länge des Wellenleiters im Behältern nicht geändert hat. Daraus läßt sich der Füllstand wie folgt bestimmen: Zuerst wird aus dem direkt erkennbaren Füllstandssignal 48 der Meßkurve 42a und der scheinbaren Verschiebung $x^{(1)}$ - $x^{(0)}$ des EOL-Signals 46a eine Konstante B bestimmt mit B = $(x^{(1)}-x^{(0)})/L^{(1)}$, wobei hier $L^{(1)}$ der aus dem Füllstandssignal 48 in der Meßkurve 42a bestimmte Füllstand ist, bezogen auf den tatsächlichen Ort $x^{(0)}$ des Sondenendes. Zum Zeitpunkt $t^{(2)}$, zu dem kein Füllstandssignal direkt bestimmt werden kann, kann aus dem zuvor bestimmten Wert von B und der scheinbaren Verschiebung des Sondenendsignals $x^{(2)}$ - $x^{(0)}$ der Füllstand $L^{(2)}$ nach $L^{(2)} = (x^{(2)} - x^{(0)})/B$ berechnet werden.

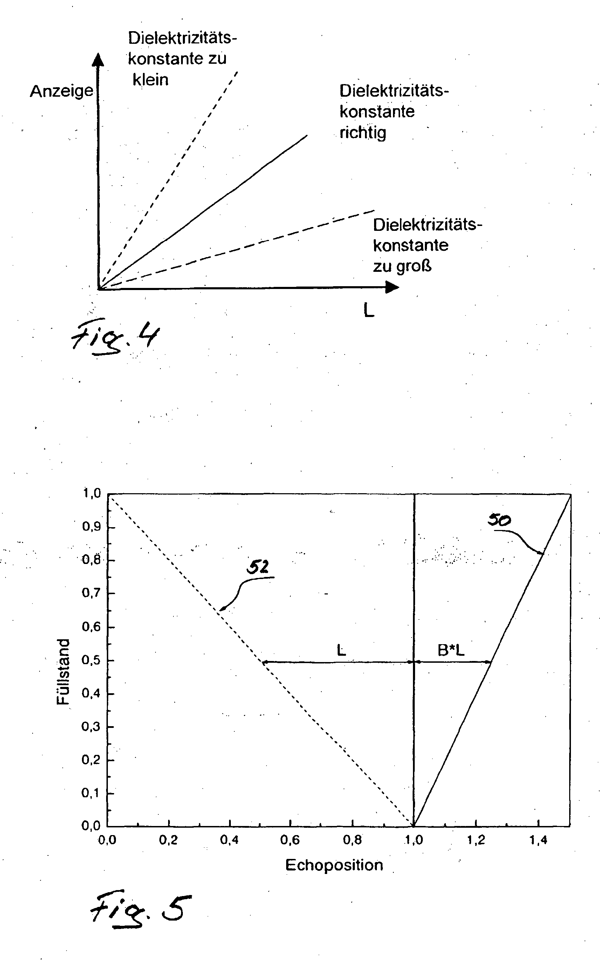

Für dämpfungsfreie, unmagnetische Dielektrika als Medium im Behälter ist $B = \sqrt{\varepsilon} - 1$, wobei $\varepsilon$ die Dielektrizitätskonstante des Mediums ist. Bekannte Verfahren zur Berechnung des Füllstands aus einem Störsignal benutzen die Kenntnis der Dielektrizitätskonstanten, während nach dem hier beschriebenen Verfähren dieser Wert nicht bekannt sein muß. Das Meßgerät kalibriert sich vielmehr selbst und auch bei wechselnden Medien ist kein Benutzereingriff zur Neukalibration erforderlich. Zudem erreicht man eine wesentlich höhere Genauigkeit als mit den bekannten Verfahren. Würde ein fest vorgegebener Wert der Dielektrizitätskonstanten zur Berechnung verwendet, der beispielsweise durch eine veränderte Feuchte eines Schüttguts nicht mit dem tatsächlichen Wert übereinstimmt, dann würde man entsprechend Fig. 4 einen falschen Zusammenhang zwischen dem angezeigten Füllstand und dem tatsächlichen Füllstand erhalten. Da die Dielektrizitätskonstante des Mediums die zeitliche Verschiebung von Signalen bewirkt, die zeitlich nach dem Füllstandssignal in der Meßkurve kommen, erlaubt das Diagramm der Fig. 4 den Fehler abzuschätzen, der bei der Füllstandsermittlung auftritt, wenn die Bestimmung des Füllstands mit zu großer bzw. zu kleiner Dielektrizitätskonstante des Mediums erfolgt.

In einem weiteren Diagramm der Fig. 5 Ist die Bestimmung des Füllstands L noch einmal in anderer Weise veranschaulicht. Im Diagramm ist für ein Beispiel eines Füllstandsmeßgerätes nach dem Laufzeitprinzip, hier vorzugsweise ein Radargerät, der relative Füllstand über Positionen der empfangenen Signale in der Meßkurve bzw. auf die Laufzeit bezogen aufgetragen. Die Bestimmung des gesuchten Füllstands L geschieht nach der oben erklärten Formel, die begrenzenden Linien werden einmal durch das EOL-Signal 50 und zum anderen durch das Füllstandssignal 52 gebildet. Das Diagram ist selbsterklärend.

Ist weder der aktuelle Füllstandswert direkt meßbar noch die scheinbare Position der Reflektionsstelle, also das EOL-Signal 46a,b oder ein anderes Signal einer Reflektionsstelle in der Meßstrecke, die von einem Einbau unterhalb des Füllstands stammt, bestimmbar, kann der letzte gültige Wert von L ausgegeben werden. Eine andere Möglichkeit ist es, mit der zuletzt bestimmten Änderungsgeschwindigkeit von L den Wert von L zu verändern oder eine Warnung oder Störungsmeldung auszugeben. All diese Reaktionen können wahlweise auch nach einer einstellbaren Verzögerungszeit erfolgen.

Das beschriebene Verfahren ist auf beliebige, aber bekannte Störreflektiönen anwendbar. Im Unterschied zu bisher bekannten Verfahren muß beim erfindungsgemäßen Verfahren auch dann nicht die tatsächliche Dielektrizitätskonstante des Mediums im Behälter bekannt sein. Das Füllstandsmeßgerät kalibriert sich vielmehr immer dann selbst, wenn mindestens ein Signal einer bekannten Reflexionsstelle, die nicht die Oberfläche des Mediums ist, also ein bekanntes wichtiges Störsignal, und das direkte Füllstandssignal von der Oberfläche des Mediums gleichzeitig vorliegen.

Das erfindungsgemäße Verfahren erlaubt insbesondere auch eine Extrapolation des Meßwerts am oberen und unteren Ende des Meßbereichs, wo In der Regel keine direkte Messung möglich ist durch die Überlagerung von Störsignalen, etwa durch Reflektionen an einer Radar-Antenne. Bei starken Störsignalen, etwa durch Eigenresonanzen des Behälters oder eines Stutzens, in den das Meßgerät eingebaut ist, kann immer dann das direkte Füllstandssignal verwendet werden, wenn es durch Überlagerung mit einem Störsignal in der Amplitude groß und damit detektierbar wird, während dann, wenn es zwischen zwei Störsignalen liegt und nicht über diese hinausragt, mit der Verschiebung des Signals von der Reflektionsstelle ein Füllstandswert interpoliert werden kann. Das Verfahren adaptiert sich auch selbständig an eine vorliegende Meßsituation, während bei bisher bekannten Verfahren vom Bediener zwischen der Messung über eine Verschiebung des EOL-Signals oder einer Messung über das direkte Füllstandsecho entschieden werden muß.

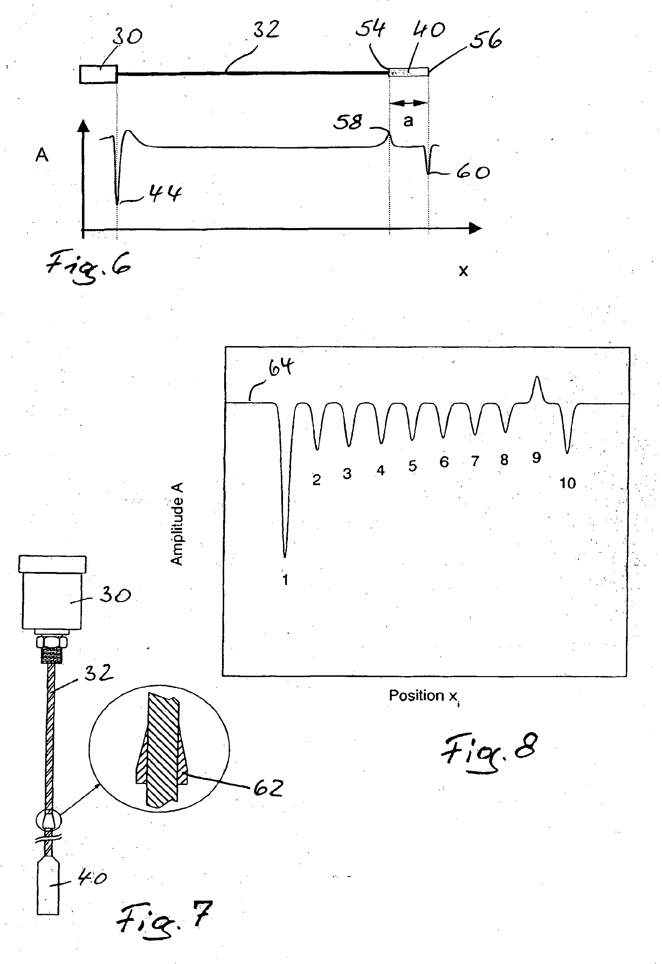

Fig. 6 zeigt eine schematische Darstellung eines Füllstandsmeßgeräts 10; 30 mit Wellenleiter und zwei Reflektionsstellen an seinem Endgewicht sowie eine entsprechende Laufzeitkurve. In Fig. 6 ist im Prinzip noch einmal das Beispiel des Radarfüllstandsmeßgeräts 30 mit Wellenleiter 32 nach der Fig. 2 aufgegriffen, wobei hier Endstellen 54, 56 des Endgewichts 40 (siehe Fig. 2) des Wellenleiters 32 bezeichnet wurden, die einen vorbekannten physikalischen Abstand a zueinander aufweisen. Darunter sind in Fig. 6 die von einer Leermessung stammenden Meßsignale zu einer Meßkurve zusammengefügt dargestellt. Es ist wiederum ein Fiducial-Signal 44 (siehe Fig. 3a, b) und die Reflektionssignale 58, 60 der Endstellen 54, 56 des Endgewichts 40 zu erkennen. Wegen der Leermessung gibt es kein Füllstandssignal. Zur Vereinfachung wurde auch auf die Darstellung anderer Störstellen-Signale von Einbauten im Behälter verzichtet.

Als Reflexionsstellen eignen sich lokale Änderungen der Geometrie, z. B. Änderungen des Querschnitts metallischer oder dielektrischer Strukturen (Verdickung, Verjüngung oder sonstige Unregelmäßigkeit), Änderungen der dielektrischen Eigenschaften an Stellen, an denen das elektrische Feld von Null verschieden ist, Änderungen der magnetischen Eigenschaften an Stellen, an denen das magnetische Feld von Null verschieden Ist, oder Änderungen der Leitfähigkeit an Stellen, an denen die Stromdichte von Null verschieden ist.

Zweckmäßigerweise werden entlang des Wellenleiters eine ganze Reihe solcher Reflektionsstellen angebracht, wobei nur ein geringer Teil der Gesamtenergie an jeder einzelnen Reflektionsstelle reflektiert werden sollte. Die Reflektionsstellen können, müssen aber nicht, äquidistant sein. Sie können gleichartig sein, oder aber auch verschieden.

In Fig. 7 ist beispielhaft eine solche auf einem Wellenleiter 32 angebrachte Reflektionstelle dargestellt, von der auch mehrere auf dem Wellenleiter 32 angebracht sein können. Die als Hülse 62 ausgeführte Reflektionsstelle ist in geeigneter Weise auf dem Wellenleiter, hier vorzugsweise ein Sommerfeld-Wellenleiter 32 In Form eines Drahtseils, befestigt und zwar so, daß sie mechanischer Beanspruchung durch das Füllgut standhält.

Änderung der Reflektionen, also der vom Meßgerät empfangenen Signale an diesen Reflektionsstellen in Bezug auf Änderung der Amplitude und der Laufzeit werden nach dem erfindungsgemäßen Verfahren erfaßt und ausgewertet und, falls vorhanden, zusätzlich die Reflexionen an der Füllgutoberfläche bzw. an Phasengrenzen im Füllgut.

Ein Beispiel für eine Laufzeit-Signalkurve 64 eines Wellenleiters mit mehreren bewußt angebrachten Reflektionsstellen ist in Fig. 8 dargestellt. Bei diesem Beispiel handelt es sich wiederum um einen Sommerfeld-Wellenleiter 32 In Form eines Drahtseils, auf dem sieben äquidistante und gleichartige metallische Verdickungen, vorzugsweise in der Form der in Fig. 7 dargestellten Hülse 62, befestigt, aufgeschraubt, aufgequetscht und/oder verlötet sind. Die dadurch erzeugten Reflektionssignale der einzelnen Reflektionsstellen bei Anregung mit Pulssignalen sind in der Laufzeitkurve 64 mit Ziffern 2 - 8 in Fig. 8 bezeichnet. Die Verdickungen können so gestaltet werden, daß bei einem negativen Sendesignal eine vorwiegend negative Reflektion entsteht, die dann von einem In der Regel positiven Füllstandssignal am Übergang von Luft zum Füllgut unterschieden werden kann. Alternativ können die Reflektionsstellen so ausgebildet sein, daß eine besondere Signalform entsteht, die beispielsweise durch Kreuzkorrelation gegenüber anderen Signalen verstärkt werden kann. In der Laufzeitkurve 64 ist die Reflekion Nr.1 am Übergang zum Sommerfeld-Wellenleiter 32 zu erkennen, die dem aus den Fig. 3a,b bekannten Fiducial-Signal entspricht. Die Reflektionen Nr.2 bis Nr. 8 stammen von den sieben Verdickungen 62 (siehe auch Fig. 7), die Reflektion Nr. 9 vom Beginn 54 des Endgewichts 40 und die Reflexion Nr. 10 vom Ende 56 des Endgewichts 40.

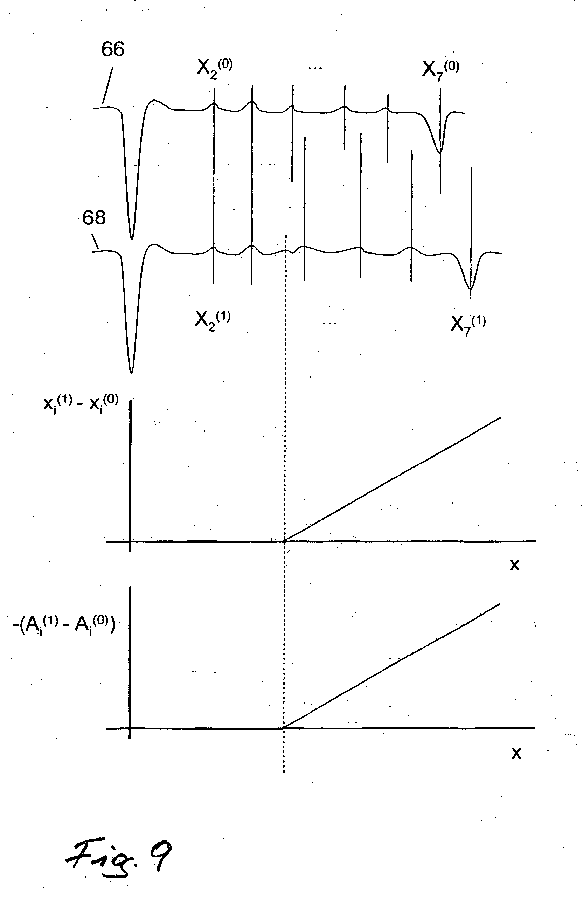

Bei mehreren Reflektionsstellen ist neben der Bestimmung des Füllstands auch eine abschnittsweise Bestimmung der ortsabhängigen komplexen Dielektrizitätskonstanten $\varepsilon = \varepsilon_1 + i\,\varepsilon_2$ möglich. Dies Ist In Fig. 9 veranschaulicht. Es werden dabei die Orte $x_j^{(0)}$ und Amplituden $A_j^{(0)}$ von Störsignalen der Laufzeit-Signalkurve 66 bei leerem Behälter mit den Orten $x_j^{(1)}$ und Amplituden $A_j^{(1)}$ dieser Störsignale in der aktuellen Laufzeit-Signalkurve 68 verglichen. Dort, wo sich diese Werte nicht ändern, ist offensichtlich kein Füllgut. Aus der Änderung der Orte kann abschnittsweise die Laufzeit (gegeben durch den Brechungsindex n) bestimmt werden, die wiederum den Realteil $\varepsilon_1$ der Dielektrizitätskonstante ergibt Aus der Änderung der Amplituden kann die Dämpfungskohstante a und daraus wiederum der Imaginärteil der Dielektrizitätskonstanten $\varepsilon_2$ bestimmt werden. Die formalen Zusammenhänge dieser Rechnung sind dem Fachmann wohlbekannt und beispielsweise in dem Werk von M. Dressel und G. Grüner, Electrodynamics of Solids, Cambridge University Press, Cambridge (2002) beschrieben.

Die dielektrische Funktion beinhaltet Informationen zur Ausbreitungsgeschwindigkeit und zur Dämpfung. Aus der Ausbreitungsgeschwindigkeit oberhalb des Mediums kann zum Beispiel ein Korrekturfaktor für die Füllstandsmessung abgeleitet werden. Damit läßt sich beispielsweise bei hochgenauen Radar-Tankstandsmessungen aus der 'Signatur⁴ eines Schwallrohrs (Überlagerung zufälliger Reflektionen an vielen kleinen geometrischen Störungen wie Schweißnähten öder Löchern) der Einfluß verschiedener Gase oberhalb des Füllguts auf die Lichtgeschwindigkeit kompensieren und damit ein genauerer Meßwert erhalten. Es sind dann keine aufwendigen Vorrichtungen zur Veränderung der Polarisation erforderlich, so wie es bisher notwendig war. Ferner kann man aus der Ausbreitungsgeschwindigkeit und/oder der Dämpfung des Mediums Rückschlüsse auf die Eigenschaften des Mediums ziehen, wie etwa dessen Leeitfähigkeit, Feuchte, Temperatur, Mischungsverhältnis, Entmischung, Schichtung, Schaumbildung, etc. Ist die festgestellte Signaldämpfung oberhalb der Füllgutoberfläche groß, kann auf eine reduzierte Meßsicherheit durch Signaldämpfung geschlossen werden.

Wie gezeigt, ist es mit den verschiedenen Ausführungsformen des Verfahrens nach der Erfindung möglich:

■ aus nicht durch den Füllstand hervorgerufenen Signalen auf einen Bereich der Meßkurve und damit der Meßstrecke zu schließen, in dem der Füllstand nicht sein kann;
■ aus nicht durch den Füllstand hervorgerufenen Signalen auf den Zustand oder die Meßfähigkeit des Gerätes zu schließen; und
■ aus nicht durch den Füllstand verursachten Signalen auf die Eigenschaften des Füllgutes, wie zum Beispiel komplexe Dielektrizitätskonstante, Leitfähigkeit,

Feuchte, Temperatur, Mischungsverhältnis, Schaumbildung etc zu schließen. Dabei nutzt die Erfindung Störsignale, die nicht durch den Füllstand hervorgerufen werden und beispielsweise vom Behälter oder Tank selbst, einem Bypass-Rohr, einem Schwallrohr , dem Wellenleiter, von einem anderen Wellenleiter als Teil des Meßsystems oder des Tankes oder von Markierungen stammen, die künstlich auf die vorgenannten Objekte aufgebracht sind. Diese Reflektionssignale, die nicht durch den Füllstand hervorgerufen werden, können aber auch von der Einkopplung des Füllstandsmeßgerätes stammen.

Die Erfindung berücksichtigt auch, daß die hier erwähnten Signale auch Überlagerungen von mehreren oder vielen Signalen sein können.

Besonders wichtig ist auch, daß wenn eine Auswertung der Meßsignale mit dem erfindungsgemäßen Verfahren zum Ergebnis führt, daß bei einer aktuellen Messung im Vergleich mit einer zu einem früheren Zeitpunkt durchgeführten Messung kein unveränderter Bereich der Meßkurve gefunden wird, auf eine Überfüllung des Behälters geschlossen werden kann.

**Patentansprüche**

1. Verfahren zur Auswertung von Meßsignalen eines nach dem Laufzeitprinzip mit Radarmesssignalen arbeitenden Füllstandsmessgeräts (10, 30), das zur Messung des Füllstands (14) eines Mediums (16) in einem Behälter (12) dient, welches Verfahren folgende Schritte umfaßt:

Aufnehmen von Referenz-Signaldaten in Abhängigkeit von der Laufzeit des Signals;
Aufnehmen wenigstens einer Meßkurve aus aktuellen Meßsignalen entlang einer Messstrecke;
Vergleichen der Meßkurve oder ausgewählter Signaldaten der Meßkurve mit den Referenz-Signaldaten oder ausgewählten Referenz-Signaldaten;
Suchen von Störsignalen und Nutzsignalen unter den Meßsignalen;
Unterscheiden der Störsignale von den Nutzsignalen aufgrund vorgegebener Signalinformationen, wobei als Signalinformationen die Amplitude, das Vorzeichen, die Phasenlage, die Breite, die Form und/oder die Position der Signaldaten herangezogen werden;
Ermitteln des Füllstands ($L^{(2)}$) aus einem für einen bekannten Ort ($x^{(0)}$) des Behälters (12) oder des Füllstandsmeßgeräts (10, 30) zu einem früheren Zeitpunkt ($t^{(1)}$) ermittelten Störsignal, einem zum selben früheren Zeitpunkt ($t^{(1)}$) ermittelten Nutzsignal und einer veränderten Position ($x^{(2)}$) des Störsignals in der aktuellen Meßkurve, für den Fall, dass kein Nutzsignal in der aktuellen Meßkurve gefunden wird oder dass kein Nutzsignal in der aktuellen Meßkurve eindeutig bestimmbar ist.

2. Verfahren nach Anspruch 1,
wobei der Füllstand ($L^{(2)}$) zu einer Zeit ($t^{(2)}$), bezogen auf den bekannten Ort ($x^{(0)}$) eines ein Störsignal hervorrufenden Einbaus des Behälters (12) oder Teils des Meßgeräts, ermittelt wird, und wobei aus einem für den bekannten Ort $(x^{(0)})$ des Behälters (12) oder des Meßgerätes zu dem früheren Zeitpunkt $(t^{(1)})$ ermittelten Störsignal an der Stelle $(x^{(1)})$, einem zum selben früheren Zeitpunkt $(t^{(i)})$ aus einem Nutzsignal ermittelten Füllstand $(L^{(1)})$ und der veränderten Position $(x^{(2)})$ zum Zeitpunkt $(t^{(2)})$ des Störsignals in der aktuellen Meßkurve nach der Formel ermittelt wird:

$$L^{(2)} = L^{(1)} \cdot \frac{x^{(2)} - x^{(0)}}{x^{(1)} - x^{(0)}}.$$

3.  Verfahren nach einem der Ansprüche 1 oder 2, wobei für den Fall, daß ein Füllstandssignal nicht oder nicht eindeutig identifizierbar ist, der gewünschte Füllstand ermittelt wird unter Berücksichtigung der zeitlichen Verschiebung von mindestens zwei Störsignalen der Meßkurve für bekannte geometrische Orte.

4.  Verfahren nach Anspruch 1, wobei die Referenz-Signaldaten aus mindestens einer vorbekannten Meßkurve gewonnen werden oder aus bekannten meßgeräte- und/oder behälterspezifischen Daten bestimmt werden. (Anspruch 2)

5.  Verfahren nach Anspruch 4, wobei die Referenz-Signaldaten durch Auswertung einer Messung bei leerem Behälter gewonnen werden.

6.  Verfahren nach Anspruch 1 oder 4, wobei bei der Auswahl der zu verwendenden Referenz-Signaldaten oder der Signaldaten der Meßkurve die Extremwerte einer Meßkurve berücksichtigt werden.

7.  Verfahren nach Anspruch 1 oder 4, wobei die Referenz-Signaldaten in Form einer Referenzkurve vorliegen.

8.  Verfahren nach Anspruch 5, wobei die Referenzkurve mit der Meßkurve durch Subtraktion oder durch Korrelation verglichen wird.

9.  Verfahren nach Anspruch 8, wobei die Subtraktion oder Korrelation nur für einen Teil der Signaldaten durchgeführt wird.

10. Verfahren nach einem der vorgehenden Ansprüche 1 bis 9, wobei die Stör- von den Nutzsignalen aufgrund von vorbekannten behälter- bzw. meßgerätespezifischen Kenndaten unterschieden werden.

11. Verfahren nach einem der Ansprüche 1 bis 9, wobei aufgrund von vorbekannten Behältereinbauten oder in den Behälter hineinragenden Teilen des Meßgerätes eine Unterteilung der Meßstrecke in Bereiche erfolgt, die nach Stör- bzw. Nutzsignalen durchsucht werden.

12. Verfahren nach einem der Ansprüche 1 bis 9, **dadurch gekennzeichnet, daß** ausgewählten Signaldaten der Meßkurve entsprechende Signaldaten der Referenzkurve zugeordnet werden und daß eine zeitliche Veränderung der Signaldaten zur Unterscheidung von Nutzsignalen und Störsignalen verwendet wird.

13. Verfahren nach Anspruch 12, **dadurch gekennzeichnet, daß** Störsignale von einem Nutzsignal dadurch unterschieden werden, daß sich die Störsignale zeitlich in gegensätzlicher Richtung als das Nutzsignal verändern.

14. Verfahren nach einem der Ansprüche 1 bis 13, **dadurch gekennzeichnet, daß** die festgestellten Störsignale bzw. Nutzsignale für die Bestimmung des Füllstands in Abhängigkeit von der Laufzeit gewichtet werden.

15. Verfahren nach einem der Ansprüche 1 bis 14, wobei für den Fall, daß ein Füllstand bestimmt worden ist, aus der zeitlichen Verschiebung von mindestens zwei Störsignalen der Meßkurve für bekannte geometrische Orte, die sich im Behälter oberhalb des Mediums befinden, ein Korrekturfaktor für die Ausbreitungsgeschwindigkeit in der Gasphase ermittelt wird, der zur Korrektur des bestimmten Füllstands dient.

16. Verfahren nach einem der Ansprüche 1 bis 15, wobei aus Signalen des Bereichs der Meßkurven, in dem die Laufzeit aktueller Meßsignale mit der von entsprechenden Referenz-Signaldaten Im wesentlichen übereinstimmt, Informationen über den Zustand oder die Funktionsfähigkeit des Meßgerätes gewonnen werden.

17. Verfahren nach einem der Ansprüche 1-16, wobei das Füllstandsmeßgerät ein freistrahlendes Radar-Meßgerät ist.

18. Verfahren nach einem der Ansprüche 1-16, wobei das Füllstandsmeßgerät mit Radarsignalen arbeitet, die auf einem Wellenleiter geführt werden.

19. Verfahren nach Anspruch 17 bis 18, wobei neben dem Füllstand die komplexe Dielektrizitätskonstante bestimmt wird.

20. Verfahren nach Anspruch 19, wobei die komplexe Dielektrizitätskonstante abschnittsweise bestimmt wird.

**Claims**

1. Procedure designed to evaluate measuring signals of a level transmitter (10, 30) which works with radar measuring signals according to the time-of-flight principle, said transmitter serving to measure the level (14) of a medium (16) in a vessel (12), wherein said procedure comprises the following steps:

   Recording of reference signal data depending on the time-of-flight of the signal; Recording of at least one measuring curve from current measuring signals along a measurement section;
   Comparison of the measuring curve or selected signal data of the measuring curve with the reference signal data or selected reference signal data;
   Search for interference signals and useful signals among the measuring signals;
   Distinguishing of the interference signals from the useful signals on the basis of prespecified signal information, wherein the amplitude, the sign, the phase position, the width, the shape and/or the position of the signal data are used as signal information;
   Determination of the level ($L^{(2)}$) from an interference signal determined at an earlier time ($t^{(1)}$) for a known position ($x^{(0)}$) of the vessel (12) or the level transmitter (10, 30), from a useful signal determined at the same earlier time ($t^{(1)}$) and from a modified position ($x^{(2)}$) of the interference signal in the current measuring curve in the event that no useful signal is found in the current measuring curve or that no useful signal can be clearly determined in the current measuring curve.

2. Procedure as claimed in Claim 1,
   wherein the level ($L^{(2)}$) is determined at a time ($t^{(2)}$) in relation to the known position ($x^{(0)}$) of a fitting in the vessel (12) or a part of the measuring device that generates an interference signal, and wherein the information is determined on the basis of an interference signal at the position ($x^{(1)}$) determined at an earlier time ($t^{(1)}$), for the known position ($x^{(0)}$) of the vessel (12) or the measuring device, a level ($L^{(1)}$) determined at the same earlier time ($t^{(1)}$) from a useful signal, and the modified position ($x^{(2)}$) at time ($t^{(2)}$) of the interference signal in the current measuring curve according to the following formula:

$$(L^{(2)}) = (L^{(1)}) \cdot ((x^{(2)}) - (x^{(0)}))/( (x^{(1)}) - (x^{(0)}))$$

3. Procedure as claimed in one of the previous Claims 1 or 2, wherein in the event that a level signal cannot be identified, or is not clearly identifiable, the desired level is determined by taking the shift over time of at least two interference signals of the measuring curve for known geometric positions.

4. Procedure as claimed in Claim 1,
   wherein the reference signal data are acquired from at least one measuring curve known in advance, or from known measuring device-specific or vessel-specific data (Claim 2).

5. Procedure as claimed in Claim 4,
   wherein the reference signal data are acquired from evaluating a measurement when the vessel is empty.

6. Procedure as claimed in Claims 1 or 4,
   wherein the extreme values of a measuring curve are taken into consideration when selecting the reference signal data to be used or the signal data of the measuring curve.

7. Procedure as claimed in Claims 1 or 4,
   wherein the reference signal data are provided in the form of a reference curve.

8. Procedure as claimed in Claim 5,
   wherein the reference curve is compared with the measuring curve by subtraction or by correlation.

9. Procedure as claimed in Claim 8,
   wherein subtraction or correlation is only performed for a portion of the signal data.

10. Procedure as claimed in one of the previous Claims 1 to 9,
    wherein the interference signals are distinguished from the useful signals on the basis of vessel-specific or measuring device-specific characteristic data that are known in advance.

11. Procedure as claimed in one of the previous Claims 1 to 9,
    wherein on the basis of previously known vessel fittings or measuring device parts projecting into the vessel, the measuring section is divided into areas which are scanned for interference signals or useful signals.

12. Procedure as claimed in one of the previous Claims 1 to 9, **characterized in that** appropriate signal data of the reference curve are assigned to selected signal data of the measuring curve and **in that** a change in the signal data over time is used to distinguish useful signals and interference signals.

13. Procedure as claimed in Claim 12, **characterized in that** interference signals are distinguished from a useful signal **in that** the interference signals change over time in the opposite direction to the useful signal.

14. Procedure as claimed in one of the previous Claims 1 to 13, **characterized in that** the interference signals and useful signals identified are weighted as a function of the time-of-flight for the determination of the level.

15. Procedure as claimed in one of the previous Claims 1 to 14, wherein in the event that a level has been determined, the shift over time of at least two interference signals of the measuring curve for known geometric positions, which are located above the medium in the vessel, is used to determine a correction factor for the speed of propagation in the gas phase which is used to correct the level determined.

16. Procedure as claimed in one of the previous Claims 1 to 15, wherein information about the condition or the functional integrity of the measuring device is obtained from signals of the area of the measuring curve in which the time-of-flight of the current measuring signals essentially coincides with that of corresponding reference signal data.

17. Procedure as claimed in one of the previous Claims 1 to 16, wherein the level transmitter is a free-space radar measuring device.

18. Procedure as claimed in one of the previous Claims 1 to 16, wherein the level transmitter works with radar signals that are guided on a wave guide.

19. Procedure as claimed in Claims 17 to 18, wherein the complex dielectric constant is determined in addition to the level.

20. Procedure as claimed in Claim 19, wherein the complex dielectric constant is determined section by section.


**Revendications**

1. Procédé destiné à l'évaluation de signaux de mesure d'un transmetteur de niveau (10, 30) fonctionnant avec des signaux de mesure radar d'après le principe du temps de propagation, lequel sert à la mesure du niveau (14) d'un produit (16) dans un réservoir (12), lequel procédé comprend les étapes suivantes :

   Enregistrement des données de signal de référence en fonction du temps de propagation des signaux;
   Enregistrement d'au moins une courbe de mesure à partir des signaux de mesure actuels le long de la section de mesure ;

Comparaison de la courbe de mesure ou de données de signal sélectionnées de la courbe de mesure avec les données de signal de référence ou des données de signal de référence sélectionnées ;

Recherche de signaux parasites et de signaux utiles parmi les signaux de mesure;

Distinction des signaux parasites des signaux utiles sur la base d'informations de signal prédéfinies, les informations de signal étant dérivées de l'amplitude, du signe, de la position de phase, de la largeur, de la forme et/ou de la position des données de signal ;

Détermination du niveau ($L^{(2)}$) à partir d'un signal parasite déterminé à un moment antérieur ($t^{(1)}$) pour un emplacement connu ($x^{(0)}$) du réservoir (12) ou du transmetteur de niveau (10, 30), d'un signal utile déterminé au même moment antérieur ($t^{(1)}$) et d'une position ($x^{(2)}$) modifiée du signal parasite dans la courbe de mesure actuelle, pour le cas où aucun signal utile n'est trouvé dans la courbe de mesure actuelle où aucun signal utile ne peut être déterminé de façon claire dans la courbe de mesure actuelle.

2. Procédé selon la revendication 1,
pour lequel le niveau ($L^{(2)}$) est déterminé en un temps ($t^{(2)}$) rapporté à l'emplacement connu ($x^{(0)}$) d'un élément du réservoir (12) ou d'une partie du transmetteur générant un signal parasite, et pour lequel est déterminé, à partir d'un signal parasite à l'endroit ($x^{(1)}$) déterminé à un moment antérieur ($t^{(1)}$) pour l'emplacement connu ($x^{(0)}$) du réservoir (12) ou du transmetteur, d'un niveau ($L^{(1)}$) déterminé au même moment antérieur ($t^{(1)}$) à partir d'un signal utile et de la position modifiée ($x^{(2)}$) à l'instant (($t^{(2)}$) du signal parasite dans la courbe de mesure actuelle, d'après la formule suivante :

$$(L^{(2)}) = (L^{(1)}) \cdot ((x^{(2)}) - (x^{(0)}))/( (x^{(1)}) - (x^{(0)}))$$

3. Procédé selon l'une des revendication 1 ou 2, pour lequel pour le cas où un signal de niveau n'est pas identifiable, ou n'est pas identifiable de façon claire, le niveau souhaité est déterminé en tenant compte du décalage temporel d'au moins deux signaux parasites de la courbe de mesure pour des emplacements géométriques connus.

4. Procédé selon la revendication 1,
pour lequel les données de signal de référence sont acquises à partir d'au moins une courbe de mesure connue à l'avance, ou sont déterminées à partir de données connues spécifiques au transmetteur et/ou au réservoir (revendication 2).

5. Procédé selon la revendication 4,
pour lequel les données de signal de référence sont acquises par l'évaluation d'une mesure avec réservoir vide.

6. Procédé selon la revendication 1 ou 4,
pour lequel, lors de la sélection des données de signal de référence ou des données de signal de la courbe de mesure devant être utilisées, les valeurs extrêmes d'une courbe de mesure sont prises en compte.

7. Procédé selon la revendication 1 ou 4,
pour lequel les données de signal de référence sont disponibles sous la forme d'une courbe de référence.

8. Procédé selon la revendication 5,
pour lequel la courbe de référence est comparée avec la courbe de mesure par soustraction ou par corrélation.

9. Procédé selon la revendication 8,
pour lequel la soustraction ou la corrélation n'est effectuée que pour une partie des données de signal.

10. Procédé selon l'une des revendications précédentes 1 à 9,
pour lequel les signaux parasites et utiles sont distingués sur la base de données caractéristiques connues à l'avance, spécifiques au réservoir ou au transmetteur.

11. Procédé selon l'une des revendications 1 à 9,
pour lequel est effectuée, sur la base d'éléments de réservoir ou de parties s'étendant dans le réservoir, connues à l'avance, une subdivision du tronçon de mesure en zones, qui sont analysées par rapport aux signaux parasites ou utiles.

**12.** Procédé selon l'une des revendications 1 à 9, **caractérisé en ce que** des données de signal correspondantes de la courbe de référence sont attribuées à des données de signal sélectionnées de la courbe de mesure, et **en ce qu'**une variation temporelle des données de signal est utilisée pour la distinction des signaux utiles et des signaux parasites.

**13.** Procédé selon la revendication 12, **caractérisé en ce que** les signaux parasites sont distingués d'un signal utile **en ce que** les signaux parasites varient temporellement en direction opposée au signal utile.

**14.** Procédé selon l'une des revendications 1 à 13, **caractérisé en ce que** les signaux parasites ou les signaux utiles déterminés sont pondérés en fonction du temps de propagation pour la détermination du niveau.

**15.** Procédé selon l'une des revendications 1 à 14, pour lequel pour le cas où un niveau a été déterminé, un facteur de correction pour la vitesse de propagation dans la phase gazeuse, qui sert à la correction du niveau déterminé, est déterminé à partir du décalage temporel d'au moins deux signaux parasites de la courbe de mesure pour des emplacements géométriques connus, qui se trouvent au-dessus du produit à l'intérieur du réservoir.

**16.** Procédé selon l'une des revendications 1 à 15, pour lequel des informations sur l'état ou la capacité de fonctionnement du transmetteur sont acquises à partir de signaux de la zone de la courbe de mesure, dans laquelle le temps de propagation des signaux de mesure actuels coïncident pour l'essentiel avec celle de données de signal de référence correspondantes.

**17.** Procédé selon l'une des revendications 1 à 16, pour lequel le transmetteur de niveau est un appareil de mesure radar à ondes libres.

**18.** Procédé selon l'une des revendications 1 à 16, pour lequel le transmetteur de niveau fonctionne avec des signaux radar, qui sont guidés sur un guide d'ondes.

**19.** Procédé selon les revendications 17 et 18, pour lequel, outre le niveau, la constante diélectrique complexe est déterminée.

**20.** Procédé selon la revendication 19, pour lequel la constante diélectrique complexe est déterminée par tronçons.

Fig. 2

Fig. 1

Fig. 3a

Fig. 3b

Anzeige

Dielektrizitätskonstante zu
klein

Dielektrizitätskonstante
richtig

Dielektrizitätskonstante
zu groß

L

*Fig. 4*

Füllstand

52

50

L

B*L

0,0   0,2   0,4   0,6   0,8   1,0   1,2   1,4

Echoposition

*Fig. 5*

Fig. 6

Fig. 7

Fig. 8

Fig. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4233324 A
- EP 0457801 A
- WO 0043806 A
- US 3474337 A
- EP 1020735 A2
- US 5614911 A
- DE 4327333 A1
- US 4234882 A

**In der Beschreibung aufgeführte Nicht-Patentliteratur**

- **VON M. DRESSEL ; G. GRÜNER.** Electrodynamics of Solids. Cambridge University Press, 2002